(19) Europäisches Patentamt
European Patent Office
Office européen des brevets

(11) Veröffentlichungsnummer : **0 667 317 A2**

# (12) EUROPÄISCHE PATENTANMELDUNG

(21) Anmeldenummer : **94118165.3**

(22) Anmeldetag : **18.11.94**

(51) Int. Cl.[6] : **C01B 31/00,** C07F 5/02, C07D 487/22

(30) Priorität : **19.11.93 DE 4339470
08.03.94 DE 4407653
09.09.94 DE 4432045**

(43) Veröffentlichungstag der Anmeldung :
**16.08.95 Patentblatt 95/33**

(84) Benannte Vertragsstaaten :
**CH DE FR GB LI**

(71) Anmelder : **Oeste, Franz-Dietrich
Tannenweg 2
D-35274 Kirchhain-Schönbach (DE)**

(72) Erfinder : **Oeste, Franz-Dietrich
Tannenweg 2
D-35274 Kirchhain-Schönbach (DE)**

(74) Vertreter : **Schlagwein, Udo, Dipl.-Ing.
Patentanwalt,
Frankfurter Strasse 34
D-61231 Bad Nauheim (DE)**

(54) **Ungefüllte und endohedral gefüllte Fullerene und Heterofullerene, Verfahren zu ihrer Herstellung und Anwendung derselben.**

(57) Ungefüllte und/oder endohedral gefüllte Fullerene und Heterofullerene, die pyrolytisch aus Edukten synthetisiert werden, bestehen vorwiegend aus polycyclischen Monomeren oder Stoffen, die diese Polycyclen bilden und die mindestens die Komponenten C oder C, B und N oder B und N enthalten.

EP 0 667 317 A2

Fullerene und endohedral gefüllte Fullerene werden durch Kondensation heißer Gase, die Metall- und Kohlenstoffdampf enthalten wie z. B. Lichtbogen- und Laserstrahlplasmen oder Flammengase mit Temperaturen größer 1000 °C hergestellt.

Nach einer anderen Methode entstehen Fullerene und auch Heterofullerene durch organischchemische Synthesemethoden im Temperaturbereich unter 300 °C.

Eine weitere Methode ist die Erzeugung von Fullerenen durch Pyrolyse organischer Stoffe, die in einer Veröffentlichung in der Zeitschrift J. Chem. Soc., Chem. Commun., Jahr 1993, Seiten 941 bis 942, beschrieben wird. Nach dieser Methode werden Fullerene und endohedrale Calciumfullerene von kleiner $C_{60}$ bis kleiner $C_{200}$ hergestellt bei Pyrolysetemperaturen von weniger als 500 °C aus festem organischen Ausgangsmaterial. Durch Pyrolyse aus organischem Material sind wahrscheinlich auch die $C_{60}$- / $C_{70}$-Fullerene entstanden, die kürzlich in kristalliner Form in Schungit-Gestein entdeckt wurden, wie in der Zeitschrift Science, Vol. 257 vom 10.07.1993, Seiten 215 bis 216, berichtet wird.

Weil auch zunehmend Interesse an spherischen sog. Giant-Fullerenen mit Kohlenstoffzahlen weit über 100 besteht, deren großer innerer Hohlraum als molekulares Containment genutzt werden kann, ist es von besonderem Interesse, das preiswerte Pyrolyseverfahren so zu modifizieren, daß damit auch die Herstellung von ungefüllten und endohedral gefüllten Giant-Fullerenen und/oder Heterofullerenen gelingt. Das ist bisher nicht gelungen. Unter dem Begriff Fullerene bzw. Heterofullerene werden hier auch solche Verbindungen verstanden, die Wasserstoff oder andere Funktionen am Käfiggerüst gebunden enthalten. Mit dem erfindungsgemäßen Verfahren der Pyrolyse ist diese Synthese überraschend gelungen. Damit können auch endohedral gefüllte und ungefüllte Fullerene und Heterofullerene hergestellt werden, die keine ausschließlich Hexagone und Pentagone enthaltende Käfigstruktur enthalten, sondern daüberhinaus Tetragone und/oder größere Ringe als Hexagone enthalten können.

Nach dem erfindungsgemäßen Verfahren werden vorzugsweise aus Ringen zusammengesetzte Moleküle, die vorzugsweise aromatische Ringe enthalten in gelöster Phase, vorzugsweise in der Gegenwart überkritischer Gasphasen pyrolysiert. Dabei entstehen endohedral gefüllte Fullerene und/oder Heterofullerene sowie unter bestimmten Reaktionsbedingungen ungefüllte mehrschalige Fullerene und/oder Heterofullerene. Heterofullerene bzw. endohedral gefüllte Heterofullerene entstehen, wenn C, N, B oder C und N oder C und B oder N und B enthaltende Ausgangsstoffe pyrolysiert werden. Ausgangsstoffe, die keine Ringe enthalten können auch für die erfindungsgemäße Synthese verwendet werden, wenn sie während der Pyrolysereaktion monomere Zwischenprodukte mit Ringstruktur ausbilden können wie z.B. Pentaerithrit, Glucose. Sie gehören aber nicht zu den bevorzugten Ausgangsstoffen, weil sie nur niedrige Ausbeuten erbringen.

Vorzugsweise werden reine Stoffe wie z.B. Naphthalin eingesetzt, weil das Spektrum der gebildeten endohedral gefüllten Fullerene bzw. Heterofullerene kleiner ist. Es können aber durchaus auch Stoffgemische eingesetzt werden wie z.B. Öle aus der Hochtemperaturpyrolyse organischen Materials wie z. B. die Steinkohlenteeröle und Steinkohlenteerpeche oder Gemische davon oder nach herkömmlichen Modifikationsverfahren daraus hergestellte annelierte Ringe enthaltende Produkte. Solche Modifikationsverfahren beinhalten z.B. die Kondensation durch Oxidationsmittel, die herkömmliche Pyrolyse oder die Kondensation in der Gegenwart von Lewiskatalysatoren oder Säuren oder die Hydrierung.

Ausgangsstoffe für endohedral gefüllte - hierfür wird im Weiteren die Abkürzung eg verwendet - Fullerene oder Heterofullerene sind z.B. sticksoffhaltige Steinkohlenteerfraktionen oder daraus isolierte stickstoffhaltige Einzelstoffe, aber auch die durch Thermolyse aus monocyclischen Borazinen hergestellten Polyborazinanaloga aromatischer Polycyclen wie Naphthalin oder Terphenyle oder Gemische dieser Stoffe auch im Gemisch mit rein carbocyclischen Stoffen.

Eine Voraussetzung für die Herstellung ungefüllter - hierfür wird im Weiteren die Abkürzung ug verwendet - mehrschaliger Fullerene bzw. Heterofullerene ist die Verwendung von ug Fullerenen bzw. ug Heterofullerenen zusätzlich zu den genannten Ausgangsstoffen.

Unter dem erfindungsgemäßen Verfahren der Pyrolyse werden auch diejenigen Reaktionen verstanden, die unter den erfindungsgemäßen Reaktionsbedingungen in der Gegenwart von Wasserstoffakzeptoren ablaufen wie z.B. von Oxidatonsmitteln oder sonstigen dehydrierenden Stoffen wie Hydridbildnern; z.B. aus der Gruppe der Platinmetalle, wobei die Dehydrierung auch durch elektrochemische Maßnahmen verursacht sein kann, und/oder die in der Gegenwart überwiegend katalytisch wirkender sauer reagierender Kontaktstoffe abläuft wie z.B. Lewis-Säuren, Zeolithe, die mindestens eines der Elemente Silizium, Aluminium, Phosphor oder Gallium enthalten, Borfluorwasserstoffsäure, Borhalogenide, Aluminiumhalogenide, starke Mineralsäuren einzeln oder im Gemisch. Die dehydrierende Pyrolyse kann auch so geführt werden, daß der Wasserstoff in Abhängigkeit seines Partialdruckes aus dem Reaktionsgemisch durch selektiv für Wasserstoff permeable Membranen wie z.B. Ag-Pd-Legierungsmembranen entfernt wird.

Als Lösungsmittel werden Stoffe oder Stoffgemische eingesetzt, die unter den Reaktionsbedingungen inert oder zumindest reaktionsträge sind; reaktionsträger zumindest, wie die eingesetzten polycyclischen Stoffe.

Vorzugsweise werden als Lösungsmittel eingesetzt $C_1$ - $C_6$ -Alkane, organische Halogenkohlenstoffverbindungen, Pyridin, Chinolin, Benzol, Xenon, Schwefelhexafluorid, Halogenwasserstoffe, Bortrifluorid, Amine, Ammoniak, Wasserkohlendioxid oder Gemische der genannten Soffe wie z.B. Pyridin-Fluorwasserstoff-Bortrifluorid-Xenon-Gemisch.

Die nicht katalysierte Pyrolyse wird vorzugsweise bei Temperaturen zwischen 400 °C und 600 °C durchgeführt. Die sauer bzw. lewissauer katalysierte Pyrolyse wird vorzugsweise im Temperaturbereich zwischen 250 °C und 400 °C vorgenommen. Zwischen 250 °C und 400 °C wird auch vorzugsweise die dehydrierend geführte Pyrolyse durchgeführt. Dieser Temperaturintervall eignet sich auch für die sauer katalysierte bzw. lewissauer katalysierte dehydrierend geführte Pyrolyse.

Vorzugsweise wird die Reaktion in einem Druckbereich durchgeführt, der mindestens dem überkritischen Druck mindestens einer der eingesetzten Lösungsmittelkomponenten entspricht.

Die polycyclische Reaktionskomponente soll unter Reaktionsbedingungen in gelöster Form vorliegen. Untet "gelöst" wird hier auch die in molekulardisperser Form in dichten Gasphasen verteilte Reaktionskomponente verstanden. Die Konzentration der Reaktionskomponente in der oder den fluiden Phasen soll dabei vorzugsweise unter 10 Gewichtsprozent liegen, wenn überwiegend einschalige eg-Fullerene bzw. eg-Heterofullerene hergestellt werden sollen.

Im Fall der oxidierenden Dehydrierung wird das Oxidationsmittel vorzugsweise so langsam zugegeben, daß einerseits die freiwerdende Reaktionswärme bequem abgeführt werden kann und andererseits die Konzentration der durch die Dehydrierung aus den Polycyclen gebildeten polycyclischen Kondensate, die eine Vorstufe der Fullerene bzw. Heterofullerene bilden und die schwerlöslicher sind, als die Eduktpolycyclen, nicht so hoch wird, daß die polycyclischen Kondensate ausgefällt werden und damit als Bausteine für die Fulleren- bzw. Heterofullerenbildung verloren gehen. Dementsprechend muß auch die thermisch oder katalytisch-thermisch oder auch die katalytisch-dehydrierend-thermisch geführte Pyrolyse bezogen auf das gewählte Temperaturniveau so geführt werden, daß auch hierbei die polycyclischen Fulleren-/Heterofulleren-Vorprodukte nur so langsam gebildet werden, daß sie nicht ausfallen. Die gewünschten Fullerene bzw. Heterofullerene bilden sich nämlich nach dem erfindungsgemäßen Verfahren vorzugsweise in der gelösten Phase und nicht aus dem ausgefällten Material. Letzteres bildet nämlich koksähnliche bzw. graphitähnlich aufgebaute polymere Vorprodukte.

Bei der oxidierenden Dehydrierung wird vorzugsweise etwas weniger Oxidationsmittel zugeführt, als der stöchiometrischen Menge für den Wasserstoffgehalt entspricht, um die Bildung von Oxidationsmittel-Kohlenstoff-Bindungen zu vermeiden, die die Bildung von Fullerenen und Heterofullerenen behindern können.

Vorzugsweise werden die Reaktionen in einem Rührautoklaven, Schüttelautoklaven oder einem anderen Druckbehälter mit guter Durchmischbarkeit durchgeführt.

Gemäß der Deutschen Patentanmeldung 41 14 536.4 können Spheren, das sind Fulleren-Fragmente bzw. Heterofulleren-Fragmente von der Größe bis zu den hier behandelten Fullerenen-/Heterofullerenen durch deren Öffnung in den Molekülkäfigen reversibel mit Wirkstoffen befüllt werden. Durch reversible Komplexierung/Dekomplexierung von Metall- oder Halbmetallionen an den liganddekorierten Öffnungsrändern läßt sich der notwendige wirkstoffverlustfreie endohedrale Einschluß reversibel verwirklichen.

Sowohl die Wirkstoffeinschlußmethode als auch deren Freisetzung durch chemische Manipulation der Spheren hat eine Reihe von Nachteilen:

1. Nach dieser Methode können nur solche Monomeren in den Spheren eingeschlossen werden, die durch die liganddekorierten Öffnungen in den Spheren hindurchpassen.
2. Für den Einschluß der Monomeren in den Spheren nach der Methode sind mindestens zwei Schritte nötig, nämlich der Schritt des Einfüllens und danach der Schritt des Verschließens.
3. Die Spherenöffnung durch Dekomplexierung erfordert aggressive Chemikalien wie z.B. Schwefelsäure. Die Anwendung hoher Temperaturen ist notwendig, um denthermisch induzierten Zerfall herbeizuführen. Sowohl die chemisch als auch thermisch induzierte Öffnung sind zeitaufwendig, d.h. die Wirkung tritt nicht in Sekundenbruchteilen ein.

Mit dem erfindungsgemäßen Verfahren der eg-Fulleren- / eg-Heterofullerenherstellung ist ein wirksameres und effektvolleres Wirkstoffeinschlußprinzip möglich geworden, das zumindest für eine Reihe von Anwendungsfällen eine Verbesserung gegenüber der Anwendung von wirkstoffgefüllten Spheren nach der bekannten Literatur darstellt.

Nach dem erfindungsgemäßen Verfahren können die Fullerene/Heterofullerene während des Syntheseprozesses, also im Moment ihrer Bildung, mit Wirkstoffen endohedral gefüllt werden. Dadurch lassen sich alle diejenigen Stoffe in die Fullerene/Heterofullerene einschließen, die die Synthese nicht behindern, die unter den Synthesebedingungen beständig sind und die nach ihren molekularen Abmessungen in die synthetisierten Fullerene/Heterofullerene hineinpassen, und die im Reaktionsgemisch in gelöster Phase vorliegen, wobei sie auch selbst die Lösungsmittelkomponente bilden können.

Entsprechend einer Ausgestaltung des erfindungsgemäßen Verfahrens können die Fullerene/Heterofullerene auch mit radioaktiven Stoffen endohedral gefüllt werden.

Die Größe der nach dem erfindungsgemäßen Verfahren hergestellten eg- oder ug- Fullerene/ -Heterofullerene ist nicht nach oben begrenzt: je größer die eingesetzten Polycyclen sind, d. h. z.B je größer die Zahl der annelierten Cyclen der Eduktkomponente ist, desto größer sind die erzeugten eg-Fullerene/-Heterofullerene. Werden eg- oder ug-Fullerene/Heterofullerene im Gemisch mit Polycyclen erfindungsgemäß pyrolisiert entstehen mehrschalige eg- oder ug-Fullerene/-Heterofullerene, die größer sind als die eingesetzten eg- oder ug-Fullerene/ -Heterofullerene. Es können ohne weiteres Fullerene/Heterofullerene mit Atomzahlen von über 2000 erreicht werden. Limitierender Faktor dafür ist nach dem erfindungsgemäßen Verfahren lediglich die Löslichkeit der Edukte im Reaktionsgemisch. Diese muß gegeben sein, damit das Verfahren erfolgreich praktiziert werden kann. So lassen sich in Abhängigkeit von der Zusammensetzung, Druck, Dichte und Temperatur der überkritische Komponenten enthaltenden Eduktlösung Polycylen mit Molgewichten von mehr als 5000 und ug-/eg-Fullerene/Heterofullerene mit Atomzahlen (inklusiv der endohedral eingeschlossenen Massen) von mehr als 2000 in der Lösung halten. Durch Verwendung höher Lösungsdichten und hoher Reaktionstemperaturen und aromatischer Lösungsmittelkomponenten kann die Löslichkeit und damit die Ausbeute optimiert werden.

Die kleinsten nach dem erfindungsgemäßen Verfahren hergestellten eg-Fullerene/ -Heterofullerene haben Atomzahlen von weniger als 100. Mit Naphthalin als Edukt entsteht beispielsweise eg $C_{60}$ als Fulleren-Hauptproduktkomponente.

Bevorzugte Stoffe zur Befüllung der Fullerene/Heterofullerene sind halogenhaltige Komponenten, z.B. Halogenwasserstoffe, Bor- und Aluminiumhalogenide, Schwermetallhaltige und Halbmetallhaltige Komponenten in der Form von Metallocenen, Porphin- oder Phtalocyaninkomplexen, Stickstoff in der Form von Aminen, Ammoniak, Pyridin, Chinolin,Chalkogene in der Form ihrer Wasserstoff- oder thermisch beständigen Kohlenstoffverbindungen, Silizium und Bor in der Form ihrer Halogen,-Wasserstoff- oder Kohlenstoffverbindungen.

Ähnlich wie die Spheren lassen sich die eg-Fullerene/-Heterofullerene je nach Wirkstoffbefüllung für unterschiedliche Zwecke einsetzen.

Weitaus ergiebiger lassen sich die mit redoxaktiven Stoffen wie Jodid oder Sulfid beladenen eg-Fullerene für Elektronenübertragungsreaktionen oder Elektronenspeichermaterial einsetzen als unbeladene oder mit nicht redoxaktiven Stoffen beladene Fullerene/Heterofullerene.

Die mit halogenhaltigen Stoffen beladenen eg-Fullerene/-Heterofullerene lassen sich in Flammschutzkomponenten verwenden, die ihre als Flammschutzmittel wirkende Halogenfracht nur im Fall der thermischen Destruktion freisetzen.

Die mit Wirkstoff gefüllten eg-Fullerene/ -Heterofullerene verursachen in einer entsprechend konditionierten Umgebung bei der Freisetzung des Wirkstoffes eine chemisch oder/und physikalisch modifizierte Umgebung z.B. durch Farbstoffabgabe, pH-Änderung, Reduktionsmittelfreisetzung. Katalysator- oder Härterfreisetzung, Halbleiterdotierstofffreisetzung wie Antimon, Gallium, Indium oder Arsen. Derartig gefüllte Fullerene/Heterofullerene eignen sich zur Anwendung in der Lithographie, Informationsspeicherfertigung, Kopierer und Mikroelektronik sowie der Fertigung dreidimensionaler Strukturen in der Mikrotechnik.

Mit medizinischen Wirkstoffen gefüllte eg-Fullerene/-Heterofullerene eignen sich nach geeigneter Einbettung in eine gewebeverträgliche Dekoration und ggf. Antikörperkopplung als sichere und hermetisch dichte Wirkstoffträger, um bestimmte Zielgewebe selektiv mit Wirkstoffen zu behandeln ohne dabei andere Gewebe mit Wirkstoffen zu belasten.

Neben der thermischen Freisetzung und der oxidierenden Freisetzung - als langsam wirkende Methode durch oxidierenden oder thermisch induzierten Fullerene/-Heterofullerenabbau - der Wirkstoffe aus den Käfigmolekülen, lassen sich die eg-Fullerene und eg-Heterofullerene durch strahleninduzierte Käfigzersetzung freisetzen. Zur Anwendung kommen elektromagnetische Strahlen, die vom Wirkstoffinhalt oder der eg-Fulleren-/-Heterofullerenhülle absorbiert werden und in Wärmeenergie transformiert werden, die zu einer raschen Destruktion der Käfige führt. In Frage kommen vorzugsweise Mikrowellen sowie Wellen im sichtbaren Bereich bis hin in den Ultraviolettbereich. Die wirksamste Methode zur strahleninduzierten Zersetzung der eg-Fullerene/-Heterofullerene zur Freisetzung der darin enthaltenen Wirkstoffe ist die Anwendung von Laserstraheln, die in hinreichender Menge von den Käfigmolekülen oder den darin enthaltenen Wirkstoffen absorbiert werden.

Bei der Verwendung thermisch hinreichend stabiler Ausgangsstoffe für das erfindungsgemäße Verfahren, die nicht ausschließlich aus Hexagon- und Pentagonnetzwerk bestehen wie z.B. die annelierten Sub- und Superphtalocyanine, Porphycene, Hemiporphyrazine, Sapphyrine, Rubyrine, Porphine, Naphtalo- und Phtalocyanine sowie weitere Tetrapyrrol- Tripyrrol- und Pentapyrrolmakrocyclen des einfachen und expandierenden Typs oder deren Oxa- Thia- oder Selenhomologen, ggf. auch mit komplexierten Metallen wie z.B. Kupfernaphthalocyanin, die vorzugsweise stabile aromatische Annulensysteme aufweisen oder diese im Verlauf der Pyrolysereakton ausbilden, entstehen eg-Fullerene/-Heterofullerene, die nicht aus geschlossenem

Hexagon- und Pentagonnetzwerk bestehen, sondern auch größere Öffnungen enthalten können; und zwar sind in der Regel die Öffnungsränder mit Stickstoff- und/oder Chalkogen- und /oder Kohlenstoffunktionen bzw. deren Wasserstoffverbindungen besetzt, sofern diese Funktionen nicht mit komplexierten Metallen oder Halbmetallen verbunden sind, aber auch mit Wasserstoffunktionen.

Auch bei der erfindungsgenäßen Verwendung von Poycyclen wie z.B. Dibenzothiophen, Dibenzofuran, Dibenodioxin und deren hexa- und/oder pentacyclenannelierten Hologen, also polycyclischen Verbindungn, die aus Hexa- und/oder Pentacyclen bestehen, entsehen eg-Fullernen/-Heterofullerene, die nicht aus geschlossenem Hexagon- und Pentagonnetzwerk bestehen, sondern daneben größere Öffnungen enthalten.

Aber auch bei der Verwendung ausschließlich carbo-, aza- und / oder boracyclischer Polycyclen als eg-Fulleren-/-Heterofulleren-Precursor können derartige größere Öffnungen in den hergestellten fullerenen oder Heterofullerenen entstehen. Diese Käfigmoleküle sind in der Regel wasserstoffhaltig.

Alle diese Käfigmoleküle bestehen jedoch überwiegend aus geschlossenem Hexagon-/Pentagonnetzwerk und werden hier deshalb als Fullerene oder Heterofullerene bezeichnet.

Bei der erfindungsgemäßen Verwendung von Polycyclen, die neben Hexa- bzw. pentacyclischem Netzwerk auch Tetracyclen enthalten, beispielsweise sei hier das Tris (benzocyclobutadieno) benzol genannt, können Fullerene/Heterofullerene entstehen, die neben Hexa- und Pentacyclennetzwerk bzw. größeren Polygonöffnungen auch tetracyclisches Netzwerk enthalten. Auch diese Käfigmoleküle werden hier als Fullerene oder Heterofullerene bezeichnet.

Durch oxidierende Behandlung mit chalkogenhaltigen Reaktionsmitteln wie z. B. Salpetersäureoxidation, Begasung mit Wasserdampf bei 900 °C oder mit $H_2S/CO_2$-Gemisch bei 1000 °C können die erfindungsgemäß hergestellten Fullerene/Heterofullerene mit größeren Öffnungen versehen werden oder bereits vorhandene größere Öffnungen können erweitert werden.

Durch Umsetzung der erfindungsgemäßen Fullerene/Heterofullerene, die Öffnungen in dem Hexagon-/Pentagon- und ggf. auch Tetragon- und/oder Heptagon- und/oder Oktagonnetzwerk enthalten, mit kondensierenden Chemikalien wie z. B. Elementarschwefel, elementares Selen, Schwefel- oder Selenhalogeniden, ungesättigten oder anderweitig reaktiven Kohlenstoff und/oder Stickstoff und/oder Bor und/oder Chalkogen und/oder Halogen enthaltenden Funktionen im Temperaturbereich unter 500 °C können die Öffnungen verkleinert werden. Das gelingt auch bei Temperaturen von vorzugsweise 700 °C - 1000 °C mit kondensierenden Chemikalien, die C und/oder N und/oder B in Bezug auf den Gehalt von Chalkogen und/oder Halogen -sofern Halogen bzw. Chalkogen vorhanden ist - um Überschuß enthalten wie z. B. Cyanwasserstoff, Ethen, Acetylen, Ethan, Ethanol, Borazin, Ferrocen.

Mit Polycyclen aus der Gruppe der einfachen Metallocenderivate wie z. B. dem Decaphenylstannocen, Decaphenylmolybdenocen, Deca(3-methylphenyl)stannocen, Deca(5-pyrimidyl)stannocen oder aus der Gruppe der annelierten Metallocenderivate wie z. B. dem Tetrafluoranthenyluran, lassen sich ebenfalls endohedrale Fullerene/Heterofullerene erzeugen, die zwar überwiegend zu den kleineren Käfigmolekülen mit weniger als 100 Käfiggerüstatomen gehören. Die genannten einfachen Metallocenderivate lassen sich nicht nur unter Überdruckbedingungen zu Käfigmolekülen dehydrierend pyrolysieren, sondern es gelingt auch, diese in einfachen Gasphasen im Vakuum oder in adsorbierter Phase zu eg-Fullerenen/-Heterofullerenen umzusetzen:

Die Formel 1 zeigt das eg-Fulleren, das aus Decaphenylstannocen durch dehydrierende Pyrolyse erzeugt werden kann mit der Summenformel $C_{70}H_{20}Sn$.

Die Formel 2 zeigt das eg-Fulleren, das aus Deca(3-methylphenyl)stannocen durch dehydrierende Pyrolyse erzeugt werden kann und das die Summenformel $C_{80}Sn$ hat.

Die Formel 3 zeigt das eg-Heterofulleren, das aus Deca(5-pyrimidyl)stannocen durch dehydrierende Pyrolyse erzeugt werden kann und das die Summenformel $C_{50}N_{20}Sn$ hat.

Die Formel 4 zeigt das eg-Fulleren, das aus Deca(3-methylphenyl)stannocen durch dehydrierende Pyrolyse erzeugt werden kann und das die Summenformel $C_{80}Sn$ hat. Es entsteht zusammen mit dem isomeren eg-Fulleren, das in der Formel 2 gezeigt wird.

Formel 1

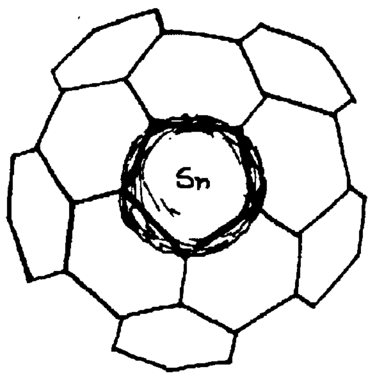

$C_{70}H_{20}Sn$
Ansicht von der "Polseite"

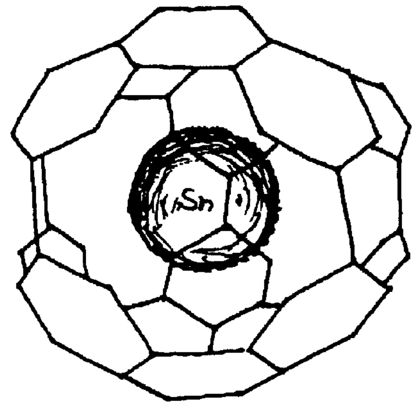

$C_{70}H_{20}Sn$
"Seiten"-Ansicht

Formel 2

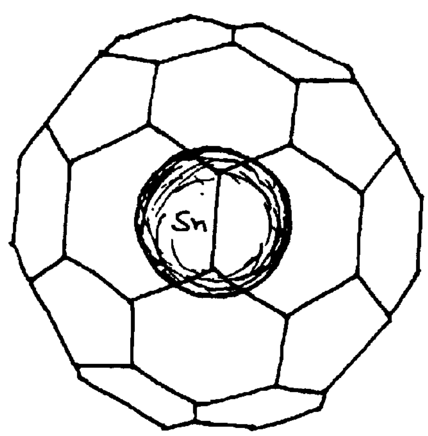

$C_{80}Sn$
"Seiten"-Ansicht

Formel 3

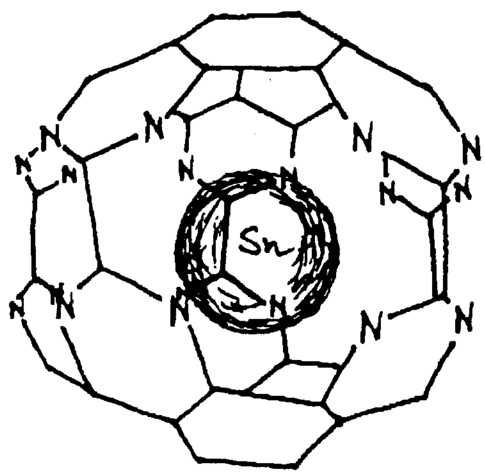

$C_{50}N_{20}Sn$

"Seiten"- Ansicht

Formel 4

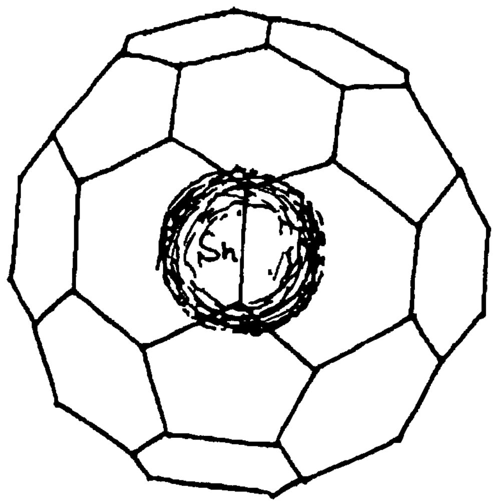

$C_{80}$ Sn

"Seiten"-Ansicht

In den Fällen, in denen die eg-Fullerene/-Heterofullerene Öffnungen enthalten, die ausschließlich oder im Gemisch mit N-, S-, Se-, O- oder C-Funktionen dekoriert sind, lassen sich die Öffnungen durch komplexierbare Metalle und/oder Halbmetalle verschließen.

Wirkstoffe, die durch diese größeren Öffnungen hindurchpassen, und die unter den Reaktionsbedingungen der Umsetzung der Fullerene/Heterofullerene zum Verschließen bzw. Verkleinern der Öffnungen beständig sind, können in die nach dem erfindungsgemäßen Verfahren hergestellten eg-Fullerene/Heterofullerene hineinbefördert werden und bleiben in diesen nach der Verschluß- bzw. Verkleinerungsreaktion endohedral eingeschlossen. Erfindungsgemäß werden die einzuschließenden Wirkstoffe molekulardispers dem Verschluß- bzw. Verkleinerungsreaktionsgemisch hinzugefügt.

Je nach Komplexbindungsform und -stärke können die endohedral eingeschlossenen Wirkstoffe durch Dekomplexierungsreaktionen wieder aus den Fullerenen/Heterofullerenen freigesetzt werden, wenn die Öffnungen durch eine Dekomplexierungsreaktion - z.B. durch pH-Verschiebung - wieder freigemacht werden. Dies hat den Vorteil, daß die Fullerene/Heterofullerene beliebig oft wiederbenutzt werden können. Die N-, S-, Se, O- und C-Funktionen können in den Fällen, in denen die Öffnungen der Fullerene/Heterofullerene mit annelierten Pyrrol- bzw. Thiopen- bzw. Cyclopentadien bzw. Selenophen bzw. Furanfunktionen dekoriert sind, auch mit Alkylresten oder komplexierten Anionen verbunden werden, die ebenfalls zum Verschluß bzw. der Verkleinerung der Öffnungen beitragen können.

Das erfindungsgemäße Herstellungsverfahren führt zu ein- und mehrschaligen eg-Fullerenen/-Heterofullerenen. Bei niedrigen Konzentrationen des Eduktes bzw. der Edukte in der Lösung wird überwiegend einschaliges eg-Fulleren/-Heterofulleren gebildet, wie etwa bei ca. 1%iger Eduktlösung. Bei hohen Eduktkonzentrationen - z. B. 10%iger Eduktlösung - wird überwiegend zwei- und mehrschaliges eg-Fulleren/-Heterofulleren gebildet.

Es hat sich überraschend gezeigt, daß in dem Fall, daß unter den Bedingungen der Druckpyrolyse eg- oder ug-Fullerene/-Heterofullerene den zu pyrolysierenden Polycyclen beigegeben sind, diese zu mehrschaligen eg- oder ug-Fullerenen/-Heterofullerenen umgesetzt werden können. Dabei können ein- und mehrschalige Fullerene/Heterofullerene als Edukte eingesetzt werden.

Der lewissauer katalysierten Pyrolyse vorgelagert und/oder gleichzeitig mit dieser verbunden können sauer katalysierte Alkylierungsreaktionen durchgeführt werden. Vorzugsweise werden hierzu bifunktionelle Alkylierungsmittel wie Dihalogenmethane eingesetzt. Auch diese Alkylierungsreaktionen werden vorzugsweise in der Gegenwart dichter überkritischer Gasphasen vorgenommen.

Bevorzugte polycyclische Aromaten für diesen Zweck sind solche, die nach der erfindungsgemäßen Reaktion zu Bestandteilen der Fulleren-/Heterofulleren-Ecken werden. Das sind Carbo- und Heterocyclen, die mindestens eine cyclische Funktion enthalten, die nicht hexacyclisch ist. Beispiele hierfür sind Corannulen, annelierte Fulvalene, arylierte Fulvalene, annelierte und arylierte Pentalene, Triquinacen und dessen annelierte und arylierte Homologen, annelierte und arylierte S-Indacene, pyrrolhaltige Polycyclen, wie Porphine, Subporphine und Superporphine, sowie deren annelierte und arylierte Homologen, sowie $(1_n)$-Orthocyclophane und deren annelierte und arylierte Homologen.

Besonders bevorzugt davon sind die $(1_n)$-Orthocyclophane mit n=3 und n=5, sowie die Porphine und Corannulene.

So entsteht bei der Reaktion von $1_3$-Orthocyclophan mit Dichlormethan unter den angegebenen Reaktionsbedingungen das Hydrofulleren $C_{96}$ $H_{72}$, dessen Formel (5) als Schlegel-Diagramm dargestellt ist.

Bei entsprechendem Dichlormethanüberschuß, sowie dehydrierenden Bedingungen können diese Hydrofullerene weitgehend dehydriert werden und in wasserstoffarme Fullerene mit komplett anneliertem

Formel 5

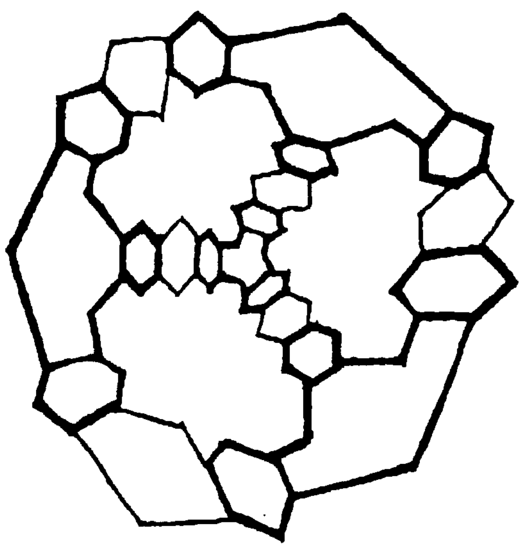

Formel 6

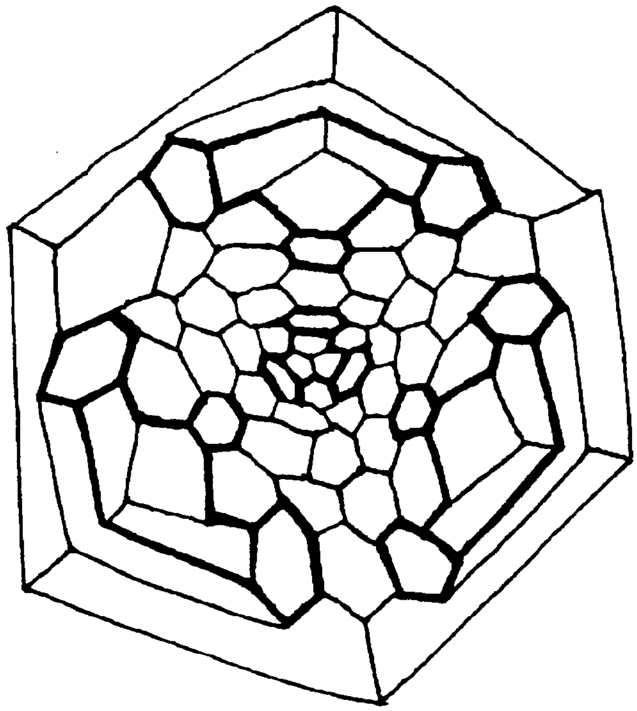

Pentagon-/Hexagonnetzwerk überführt werden entsprechend Schlegel-Diagramm (6). Die C-Zahl x dieser Fullerene wird durch die Formel (7) beschrieben. Es haneldt sich dabei um tetraedersymmetrische Fullerene, deren Größe und damit C-Zahl x durch die Zahl n festgelegt wird, die eine ganze ungerade Zahl größer oder gleich 3 ist. Dabei wird die Zahl n bestimmt durch die Anzahl der in Reihe annelierten Benzolringe des ($1_3$)-Orthocyclophans, dessen einfachster Vertreter durch die Formel (8) charakterisiert ist,

Formel 7 $$x = 28 + 36\frac{\left(\frac{n+1}{2}+1\right)\left(\frac{n+1}{2}\right)}{2}$$

Formel 8

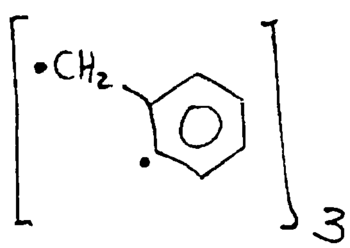

und das durch Alkylierung, Kondensation, Annelierung und Dehydrierung in das Fulleren $C_{136}$ überführt werden

kann, das einen Eckenabstand - mit "Ecke" werden die entsprechend Triquinacen annelierten Pentagone bezeichnet - von n=3 Hexacyclen entsprechend Formelausschnitt (9) enthält. In der Formel (9) sind die ursprünglichen Cyclophanbestandteile fett hervorgehoben.

Formel 9 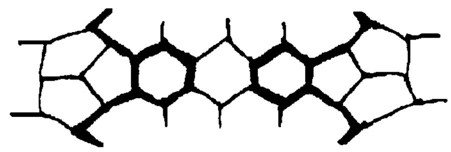

Die Verwendung eines höher annelierten [$1_3$]-Orthocyclophans, wie es beispielsweise durch in-situ-Alkylierung und -Kondensation aus dem Hexaphenylsubstitut (10) entsteht oder wie es in der Formel (11) gezeigt wird mit 3-facher Hexacyclen-Annelierung in Reihe

Formel 10 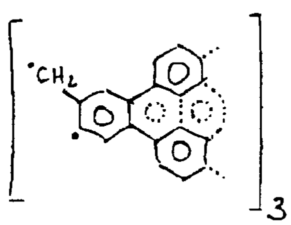

Formel 11 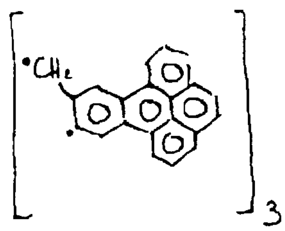

ergibt bei erschöpfender Alkylierung/Kondensation/Dehydrierung das Fulleren $C_{388}$, das einen Eckenabstand von n=7 entsprechend Formelausschnitt (12) enthält. In der Formel (12) sind die ursprünglichen Cyclophanbestandteile fett hervorgehoben.

Formel 12 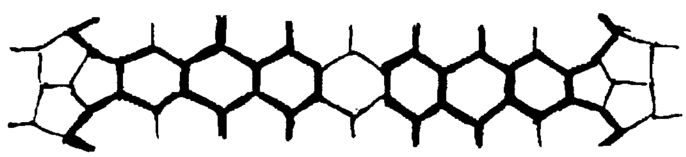

Analog entsteht bei der Reaktion von [$1_4$]-Orthocyclophan mit Dichlormethan unter den erfindungsgemäßen Reaktionsbedingungen das Hydrofulleren $C_{192}H_{168}$, dessen Formel (13) als Schlegel-Diagramm dargestellt ist. Hier können unter erschöpfenden Alkylierungs-, Kondensations- und Pyrolysebedingungen wasserstoffreie Fullerene erhalten werden mit

Formel 13

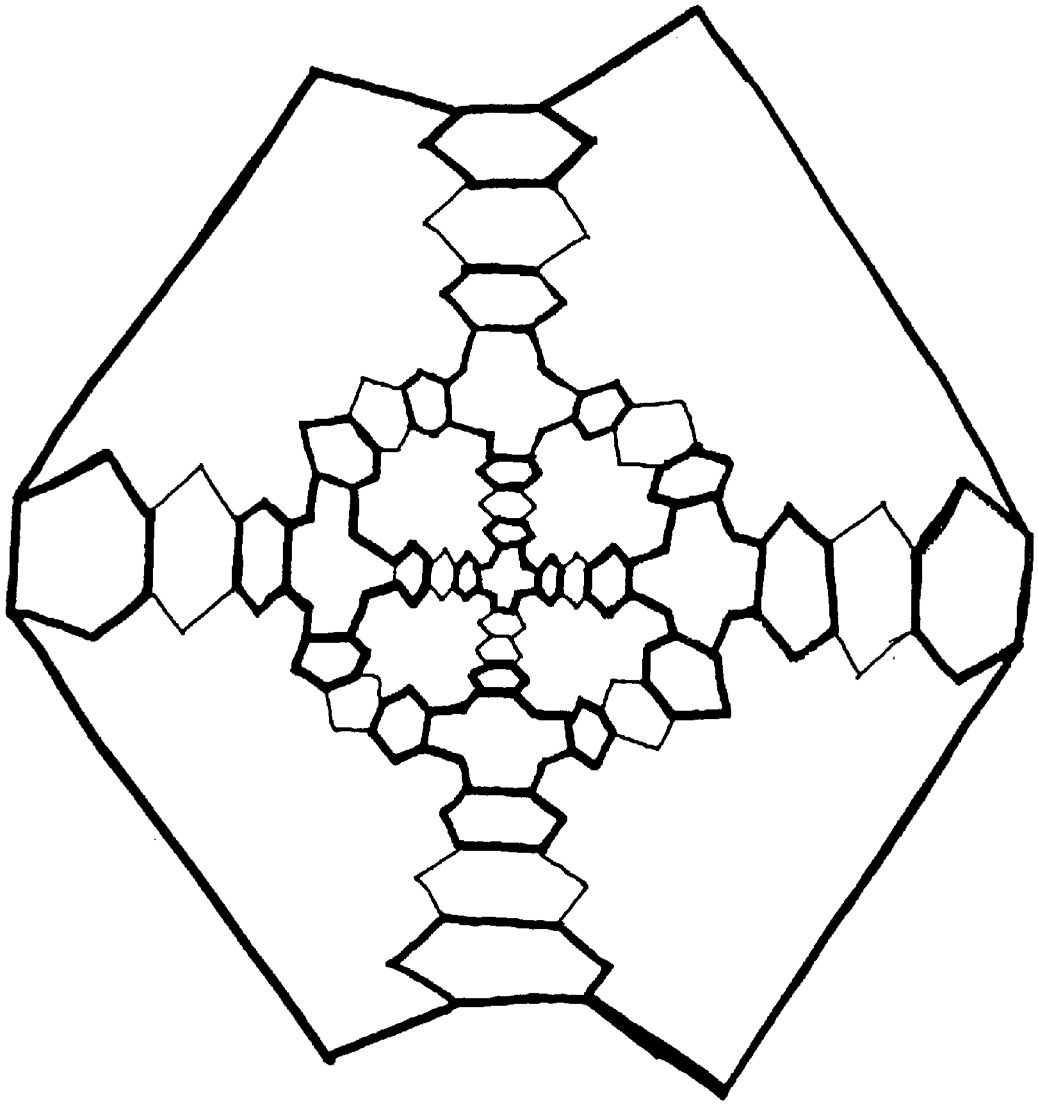

Formel 14

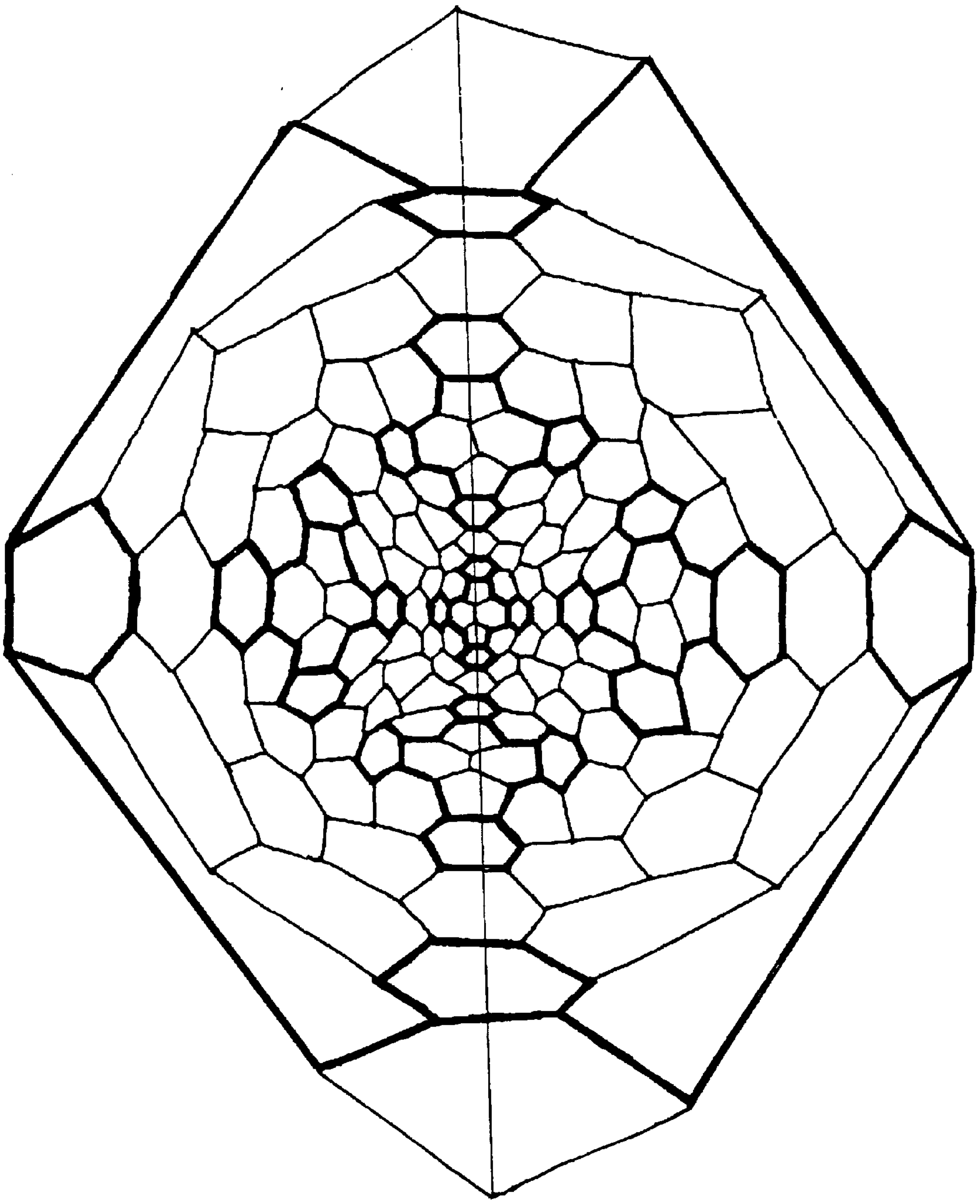

Formel 15 $$x = 60 + 56n + 16\frac{n(n-1)}{2}$$

Formel 16

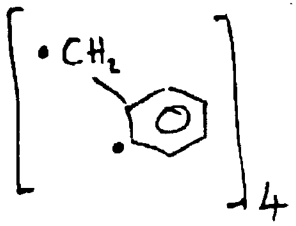

Formel 17

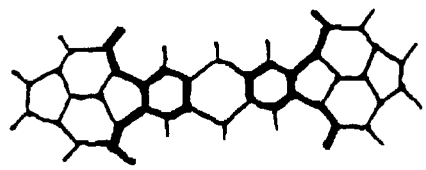

Formel 18

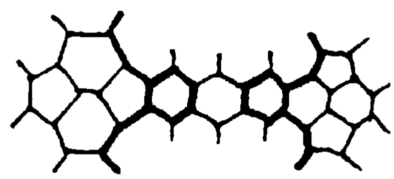

Formel 19

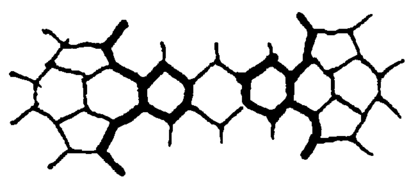

Formel 20

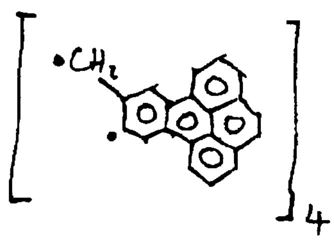

Formel 21

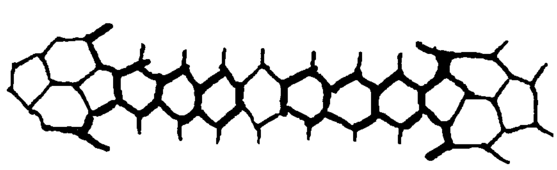

komplettem Hexagon-Pentagonnetzwerk das in dem Schlegel-Diagramm (14) gezeigt wird mit der C-Zahl x entsprechend Formel (15). Dabei handelt es sich um oktaedersymmetrische Fullerene mit Ecken, die Pentagonpaare enthalten, die annelierten Fulvalenen entsprechen. Deren C-Zahl x und damit die Größe wird durch die Zahl n festgelegt. n wird dabei durch eine ganze ungerade Zahl größer gleich 3 beschrieben, wobei n=3 durch den einfachsten Vertreter der $1_4$ Orthocyclophanreihe (16) erzielt werden kann.

Der Eckenabstand, gemessen in linear annelierten Hexacyclen, gibt die Zahl n an wie in den Formeln (17) bis (19) für n=3 dargestellt ist (Cyclophangerüstbestandteile fett hervorgehoben).

Entsprechend der Verwendung höher annelierter $(1_4)$-Orthocyclophane mit beispielsweise 3-facher Hexacyclenannelierung wie in Formel (20) gezeigt wird,
ergeben sich Fullerene mit n gleich 7 wie ausschnitthaft im Beispiel (21) gezeigt wird.

Analog entsteht bei der Reaktion von $(1_5)$-Orthocyclophan mit Dichlormethan unter den erfindungsgemäßen Reaktionsbedingungen das Hydrofulleren $C_{480}$ $H_{360}$, dessen Formel (22) als Schlegel-Diagramm dargestellt ist. Auch hierbei können unter erschöpfenden Alkylierungs-, Kondensations- und Pyrolysebedingungen wasserstoffreie Fullerene erhalten werden mit komplettem Hexagon-/Pentagongitter mit der C-Zahl n entsprechend Formel (24) und einer chemischen Formel entsprechend Schlegel-Diagramm (23). Dabei handelt es sich um ikosaedersymmetrische Fullerene mit Ecken, die einzelne Pentagone

Formel 22

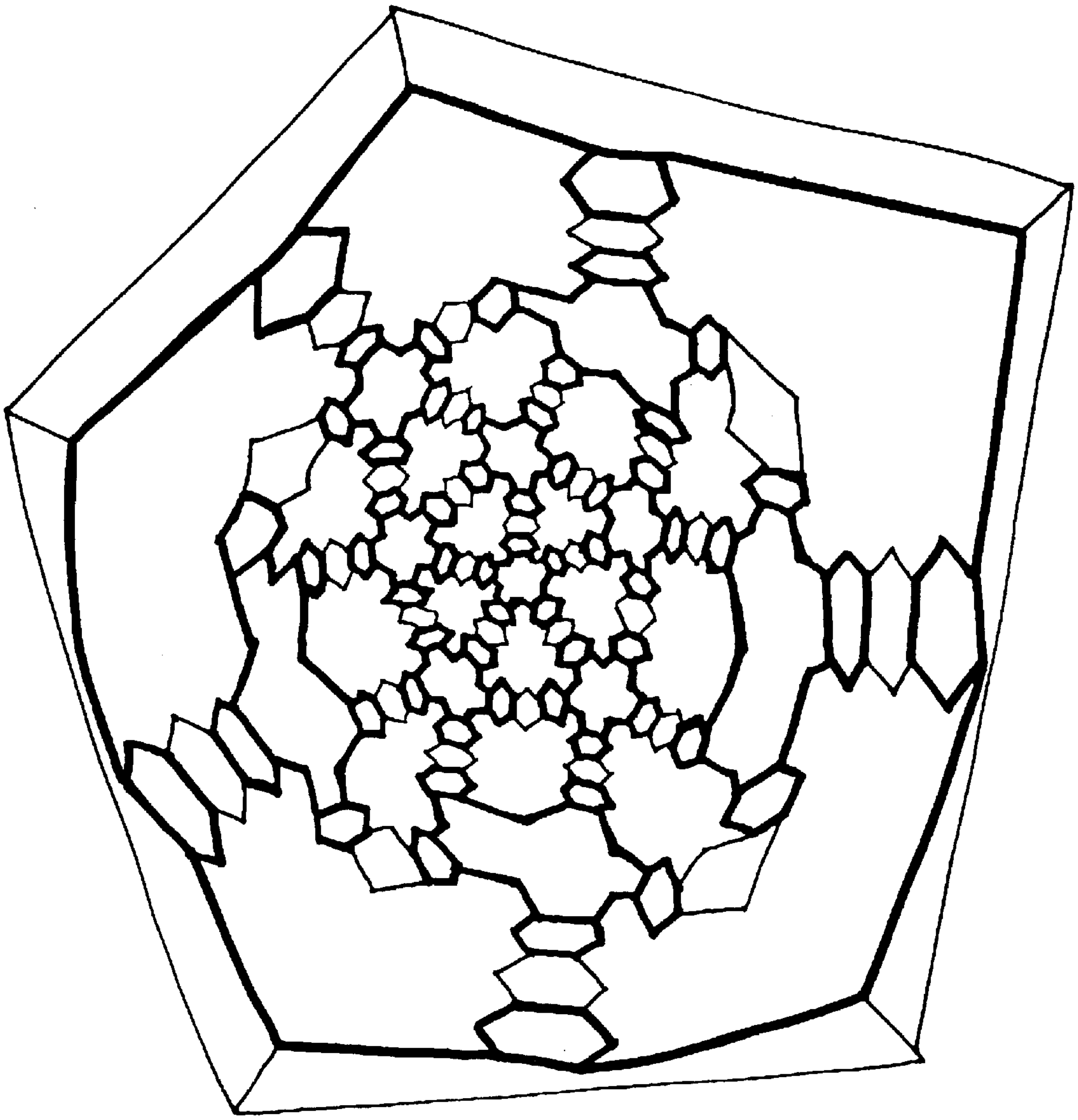

Formel 23

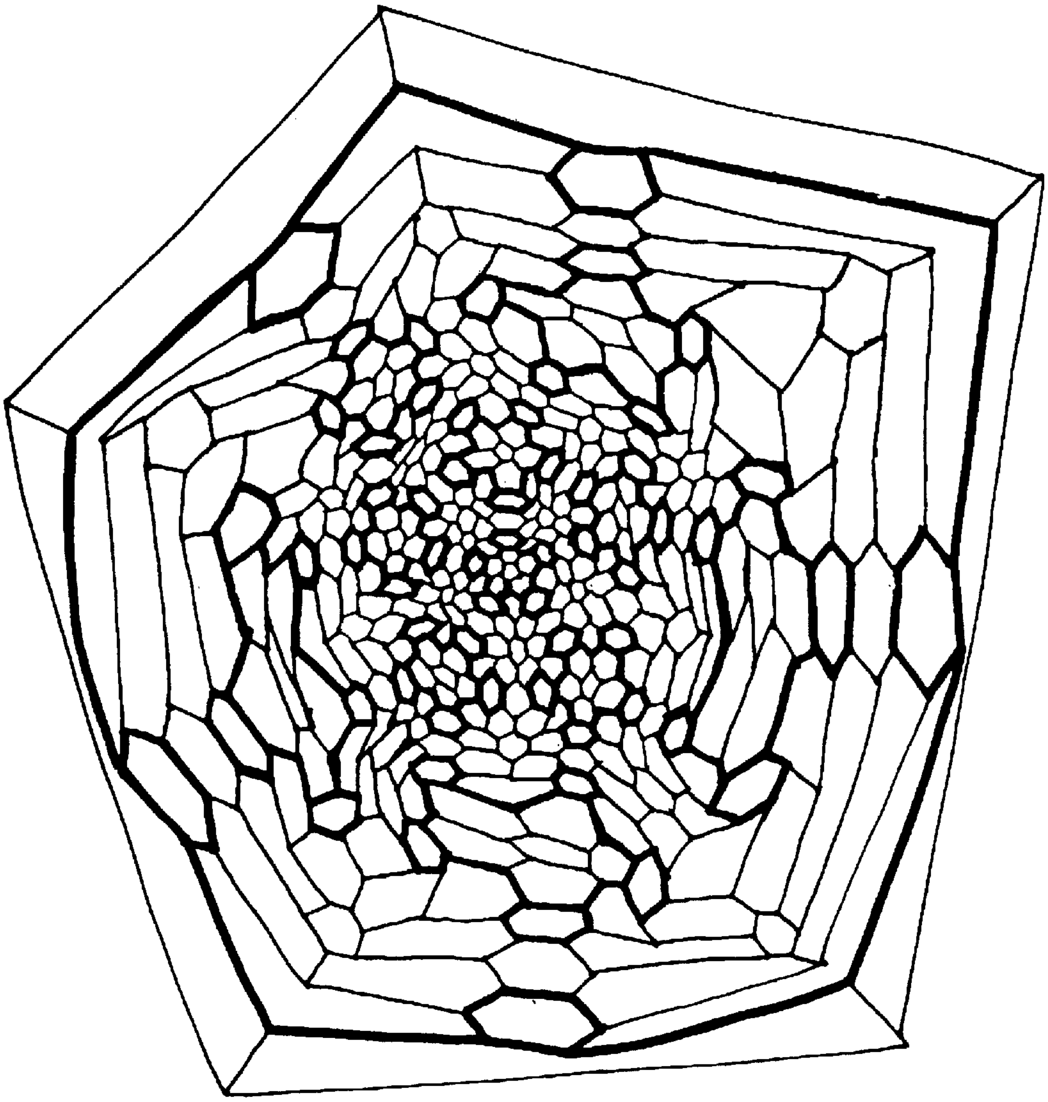

enthalten. Die C-Zahl x, die sich aus der Formel (24) ergibt, und die davon abhängige Größe der Fullerene wird durch die Zahl n festgelegt, n wird dabei durch eine ganze ungerade Zahl größer oder gleich 5 beschrieben, wobei n=5 durch den einfachsten Vertreter der ($1_5$)-Orthocyclophanreihe (25) erzielt werden kann.

Der Eckenabstand gemessen in linear annelierten Hexacyclen gibt die Zahl n an, wie in der Formel (26) für n=5 dargestellt ist (Cyclophangerüstbestandteil fett hervorgehoben).

Entsprechend der Verwendung höher annelierter ($1_5$)-Orthocyclophane mit beispielsweise 3-facher linearer Hexacyclenannelierung, wie in der Formel (27) gezeigt wird, ergeben sich entsprechend größere Fullerene - hier mit n=9, wie im Beispiel (28) ausschnitthaft gezeigt wird.

Die entsprechend durchgeführte Reaktionsfolge mit Corannulen und seinen Arylhomologen bzw. annelierten Homologen und Alkylierungsreagens Dichlormethan führt ebenfalls zu ikosaedersymmetrischen Fullerenen. Dabei können ebenfalls Hydrofullerene ohne komplettes Hexagon-Netzwerk entstehen, deren kleinster Vertreter das corannulen-stämmige Hydrofulleren $C_{300}$ $H_{120}$ ist, entsprechend Schlegel-Diagramm (29).

Bei erschöpfender Alkylierung, Dehydrierung und Kondensation entstehen ebenfalls wasserstoffreie Fullerene, wie zum Beispiel entsprechend Schlegel-Diagramm für das corannulenstämmige Fulleren (30) mit der Summenformel $C_{320}$, mit komplettem Pentagon-/Hexagonnetzwerk mit der C-Zahl x entsprechend Formel (31).

Die C-Zahl x wird durch die Zahl n festgelegt. n wird dabei durch eine ganze ungerade Zahl größer oder gleich 3 festgelegt, wobei n=3 durch den einfachsten Vertreter der Corannulenhomologen, also des Corannulens selbst, erzielt werden kann.

Formel 24 $$x = 20 + 60n + 40\frac{n(n-1)}{2}$$

Formel 25

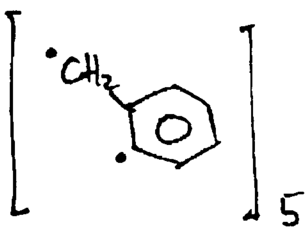

Formel 26

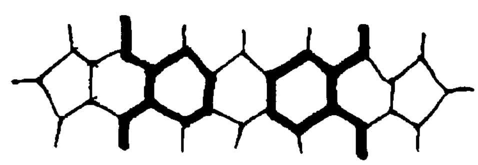

Formel 27

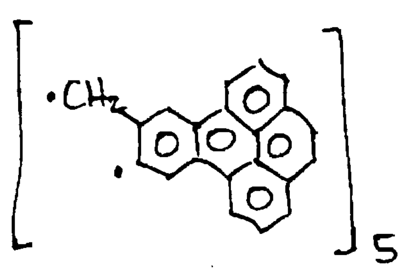

Formel 28

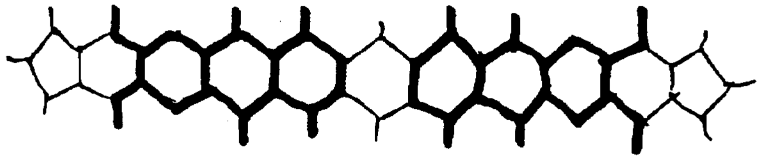

Formel 29

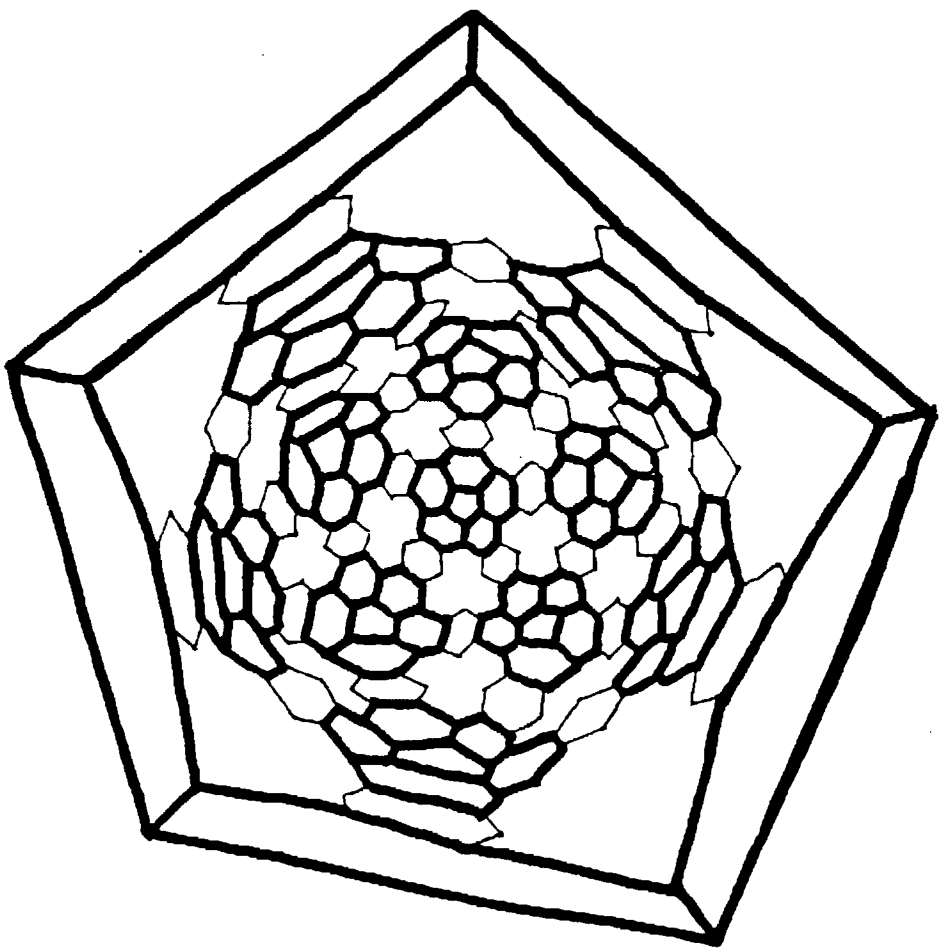

Formel 30

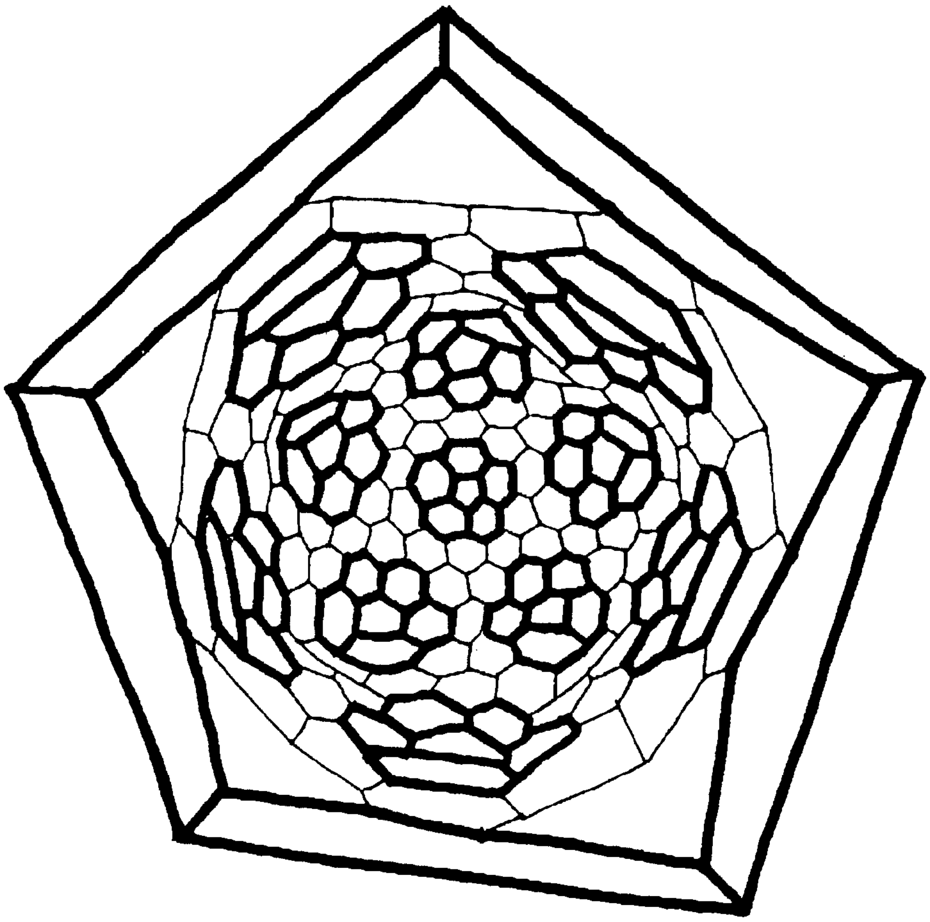

Der Eckenabstand in linear annelierten Hexacyclen gibt auch hierbei die Zahl n an, wie in dem Formelausschnitt (32) für n=3 dargestellt ist, wobei die Corannulengerüstbestandteile fett hervorgehoben sind.

Die entsprechend durchgeführten Reaktionen mit den Porphinen ergeben ebenfalls Fullerene/Heterofullerene. Wegen der in den Porphinen enthaltenen Pyrrolringe entstehen unter den eingesetzten Reaktionsbedingungen aus Porphinen keine Fullerene bzw. Heterofullerene mit geschlossenem Hexagon- und Pentagonnetzwerk. Die aus Porphinen hergestellten Heterofullerene lassen sich dabei hinsichtlich symmetrischer und topographischer Eigenschaften auf die oktaedersymmetrischen Heterofullerene mit der C-Zahl $x_1$ zurückführen, wobei die maximal mögliche Gitteratomzahl $x_2$ der porphinstämmigen Heterofullerene durch die Formel (33) errechenbar ist.

Dabei ist n eine ungerade Zahl größer oder gleich 3, die wie bei den vorhergehenden Beispielen ausgeführt, vom Annelierungsgrad/Arylierungsgrad des Porphins abhängig ist. Die 6 Ecken der porphinstämmigen oktaedersymmetrischen Heterofullerene werden durch Porphinfunktionen (34) gebildet, die flächenmäßig deckungsgleich mit dem Eck-Hexagon-/Pentagonnetzwerk der entsprechenden oktaedersymmetrischen Fullerene (35) sind. Entsprechend stehen die annelierten Pyrrolcyclen, die in dem Formelausschnitt (34) fett hervorgehoben sind, jeweils für einen Hexacyclus des entsprechenden Fullerens mit komplettem Hexagon-/Pentagongitter, wie in

dem Formelausschnitt (35) fett hervorgehoben dargestellt ist. Die C-Zahl $x_1$ des korrespondierenden oktaedersymmetrischen Fullerens mit vollständigem Hexagon/-pentagonnetzwerk mit den Eckfunktionen (35) kann mit Formel (32a) errechnet werden. Bei der Berechnung von n werden daher die entsprechenden Pyrrolfunktionen als Hexacyclen mitgezählt. Der Formelausschnitt (36) zeigt eine Kante des einfachsten porphinstämmigen Heterofullens mit n=3, wie aus dem Vergleich mit der Kante des entsprechenden Fullerens (37) hervorgeht. Der Formelausschnitt (39) zeigt die Kante des aus einem einfachen annelierten Porphin, dem Phthalocyanin hervorgeganen Heterofullerens mit n=5 im Vergleich zur Kante des

Formel 31 $$x = 20 + 60n + 40\frac{n(n-1)}{2}$$

Formel 32

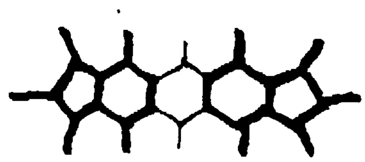

Formel 32a $$x_1 = 60 + 56n + 16\frac{n(n-1)}{2}$$

Formel 33 $$x_2 = 60 + 56n + 16\frac{n(n-1)}{2} - (6x14) + 24$$

Formel 34

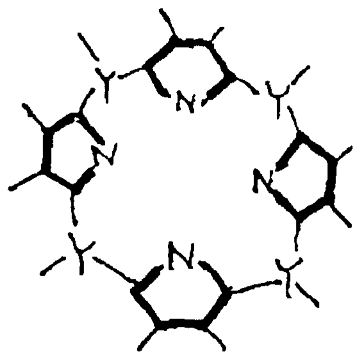

Y = C oder N

Formel 35

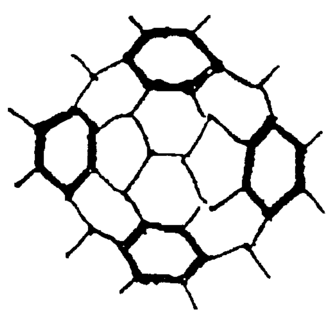

entsprechenden Fullerens (38). In den Formeln (36) und (39) sind die ursprünglichen porphinstämmigen Strukturelemente fett hervorgehoben.

Formel 36

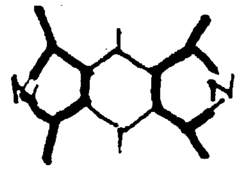

Formel 37

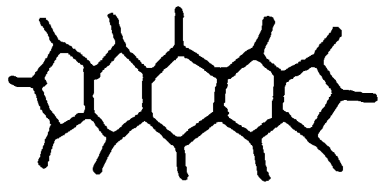

Formel 38

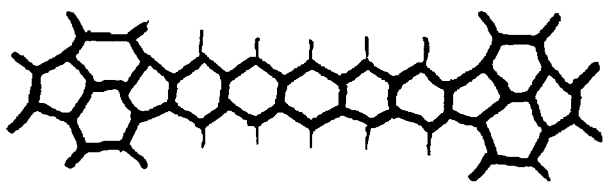

Formel 39

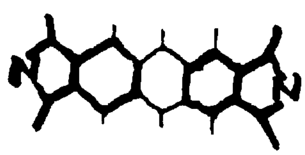

**Patentansprüche**

1. Ungefüllte mehrschalige Fullerene und ungefüllte mehrschalige Heterofullerene sowie endohedral gefüllte einschalige und mehrschalige Fullerene und endohedral gefüllte einschalige und mehrschalige Heterofullerene mit Käfigstrukturelementen, die überwiegend aus Pentagonen und Hexagonen bestehen und darüberhinaus Tetragone und/oder größere Öffnungen als Hexagone enthalten können und die Kohlenstoff, Stickstoff, Bor, Sauerstoff, Schwefel oder ausschließlich Stickstoff und Bor als Käfignetzwerkstrukturelemente enthalten können und die dadurch gekennzeichnet sind, daß sie
   a) durch Pyrolyse unter Überdruck aus gelösten nichtsphärischen aromatischen annelierte Cyclen enthaltenden Monomeren oder Stoffen, die im Verlauf der Pyrolyse derartige gelöste Monomere bilden gegebenenfalls in der Gegenwart ungefüllter ein- und/oder mehrschaliger Fullerene oder/und Heterofullerene und/oder gefüllter endohedraler ein- und/oder mehrschaliger Fullerene und/oder

Heterofullerene gebildet worden sind und daß der Pyrolyse eine Alkylierungsreaktion vorgelagert und/oder überlagert ist oder daß sie
b) durch drucklose Pyrolyse oder Pyrolyse im Vakuum aus einfachen und/oder annelierte Cyclen enthaltenden Metallocenderivaten gebildet worden sind.

2. Verfahren zur Herstellung ungefüllter mehrschaliger Fullerene und/oder Heterofullerene sowie endohedral gefüllter einschaliger und/oder mehrschaliger Fullerene und/oder Heterofullerene dadurch gekennzeichnet, daß sie
a) durch Pyrolyse unter Überdruck aus gelösten nichtsphärischen mehrcyclischen Aromaten enthaltenden Monomeren oder Stoffen, die im Verlauf der Pyrolyse derartige gelöste Monomere bilden gegebenenfalls in der Gegenwart ungefüllter ein- und/oder mehrschaliger Fullerene und/oder Heterofullerene und/oder gefüllter endohedraler ein- und/oder mehrschaliger Fullerene und/oder Heterofullerene gebildet werden oder daß sie
b) durch drucklose Pyrolyse oder Pyrolyse im Vakuum aus einfachen und/oder annelierte Cyclen enthaltenden Metallocendeivaten gebildet werden.

3. Verfahren nach Anspruch 1 und 2 dadurch gekennzeichnet, daß die Pyrolyse unter einem Druck durchgeführt wird, bei dem mindestens eine Lösungsmittelkomponente überkritisch ist.

4. Verfahren nach Anspruch 1 bis 3, dadurch gekennzeichnet, daß die Konzentration der polycyclischen Stoffe in dem Lösungsmittel oder Lösungsmittelgemisch kleiner oder gleich 10 Gewichtsprozent beträgt.

5. Verfahren nach Anspruch 1 bis 4, dadurch gekennzeichnet, daß die Pyrolyse in der Gegenwart dehydrierend wirkender Stoffe in der Form von Oxidationsmitteln, Hydridbildnern und/oder Platinmetallen oder diese enthaltenden selektiv wasserstoffdurchlässigen Metallmembranen vorgenommen wird.

6. Verfahren nach Anspruch 1 bis 5, dadurch gekennzeichnet, daß die Pyrolyse in der Gegenwart von die Polykondensation von Polycyclen katalysierenden Stoffen vorgenommen wird.

7. Verfahren nach Anspruch 1 bis 6, dadurch gekennzeichnet, daß als katalytisch aktive Stoffe Lewissäuren, Zeolithe oder Mineralsäuren verwendet werden.

8. Verfahren nach Anspruch 1 bis 7, dadurch gekennzeichnet, daß die Pyrolyse im Temperaturinterval zwischen 250 °C und 600 °C vorgenommen wird.

9. Verfahren nach Anspruch 1 bis 8, dadurch gekennzeichnet, daß annelierte überwiegend carbocyclische Stoffe eingesetzt werden.

10. Verfahren nach Anspruch 1 bis 9, dadurch gekennzeichnet, daß überwiegend aromatische polycyclische Stoffe eingesetzt werden.

11. Verfahren nach Anspruch 1 bis 10, dadurch gekennzeichnet, daß steinkohlenteerstämmige polycyclische Stoffe eingesetzt werden.

12. Verfahren nach Anspruch 1 bis 11, dadurch gekennzeichnet, daß mono- und/oder polycyclische Borazine eingesetzt werden.

13. Verfahren nach Anspruch 1 bis 12, dadurch gekennzeichnet, daß einfache oder arylierte oder annellierte Metallocenderivate eingesetzt werden.

14. Verfahren nach Anspruch 1 bis 13, dadurch gekennzeichnet, daß die Pyrolyse in der Gegenwart mindestens einer überkritischen Lösungsmittelkomponente durchgeführt wird.

15. Verfahren nach Anspruch 1 bis 14, dadurch gekennzeichnet, daß als Lösungsmittel $C_2$- bis $C_6$-Alkane, Halogenkohlenstoffverbindungen, Pyridin, Chinolin, Xenon, Schwefelhexafluorid, Halogenwasserstoffe, Bortrihalogenide, Amine oder Ammoniak einzeln oder im Gemisch verwendet werden.

16. Verfahren nach Anspruch 1 bis 15, dadurch gekennzeichnet, daß die Konzentration der Edukte bzw. Ausgangsstoffe im Lösungsmittel kleiner oder gleich 10 Gewichtsprozent beträgt.

17. Verfahren nach Anspruch 1 bis 16, dadurch gekennzeichnet, daß die Fullerene oder Heterofullerene während der Herstellung mit Wirkstoffen endohedral befüllt werden.

18. Verfahren nach Anspruch 1 bis 17, dadurch gekennzeichnet, daß die Fullerene oder Heterofullerene mit chalkogen- und/oder halogenhaltigen redoxaktiven Wirkstoffen endohedral befüllt werden.

19. Verfahren nach Anspruch 1 bis 18, dadurch gekennzeichnet, daß die Fullerene oder Heterofullerene durch Behandlung mit Wasserstoff und/oder chalkogenhaltigen Reaktionsmitteln mit polygonalen Öffnungen versehen werden, die größer sind als die hexagonale Öffnung.

20. Verfahren nach Anspruch 1 bis 19, dadurch gekennzeichnet, daß die Fullerene oder Heterofullerene, die polygonale Öffnungen enthalten, die größer sind als die hexagonale Öffnung, mit kondensierenden Chemikalien behandelt werden, um die Öffnungen zu verkleinern.

21. Verfahren nach Anspruch 1 bis 20, dadurch gekennzeichnet, kondensierende Chemikalien verwendet werden, die mindestens eines der Elemente B, C, N, O, S, Se, F, Cl, Br, J enthalten.

22. Verfahren nach Anspruch 1 bis 21, dadurch gekennzeichnet, daß der Befüllungsaustausch der endohedralen Fullerene und/oder Heterofullerene nach deren Herstellung mit Wirkstoffen durch polygonale Öffnungen geschieht, die größer sind als die hexagonale Öffnung.

23. Verfahren nach Anspruch 1 bis 22, dadurch gekennzeichnet, daß die Öffnung der endohedral gefüllten Fullerene und/oder Heterofullerene durch elektromagnetische Strahlen und/oder hohe Temperaturen und/oder durch Chemikalieneinwirkung geschieht, um die darin eingeschlossenen Wirkstoffe freizusetzen.

24. Verfahren nach Anspruch 1 bis 23, dadurch gekennzeichnet, daß die polycyclischen Aromaten vor und/oder während der Pyrolysereaktion einer Alkylierung unterzogen werden.

25. Verfahren nach Anspruch 1 bis 24, dadurch gekennzeichnet, daß als Alkylierungsmittel Dichlormethan eingesetzt wird.

26. Verfahren nach Anspruch 1 bis 25, dadurch gekennzeichnet, daß als mehrcyclische Aromaten Porphine, $(1_3)$-Orthocyclophane, $(1_4)$-Orthocyclophane oder $(1_5)$-Orthocyclophane oder deren annelierte oder arylierte Homologen eingesetzt werden.

27. Anwendung der Fullerene und Heterofullerene nach Anspruch 1, dadurch gekennzeichnet, daß sie als Flammschutzmittel oder Elektronenspeicher oder Elektronenüberträger oder Katalysator oder Wirkstoffcontainer oder Medikamentcontainer für die medizinische Anwendung oder als Wirkkomponente in Informationsspeichern oder der Kopiertechnik oder der Lithographie oder optischen Computern oder in der mikroskopischen Technik oder in der mikroelektronischen Technik verwendet werden.